# FASCICULE DE BREVET EUROPEEN

(11) **EP 1 457 031 B1**
(45) Date de publication et mention de la délivrance du brevet: **08.09.2010**
(21) Numéro de dépôt: 02805379.1
(22) Date de dépôt: 13.12.2002
(51) Int. Cl.: H04M 3/54, H04M 3/42, H04M 3/46, H04M 1/00

(54) **PROCEDE ET SYSTEME DE RENVOI AUTOMATIQUE D'APPEL TELEPHONIQUE**
VERFAHREN UND SYSTEM ZUR AUTOMATISCHEN ANRUFWEITERLEITUNG
METHOD AND SYSTEM FOR AUTOMATIC TELEPHONE CALL FORWARDING

(30) Priorité: 21.12.2001 FR 0116751
(43) Date de publication de la demande: 15.09.2004
(73) Titulaire: FRANCE TELECOM, 75015 Paris (FR)
(72) Inventeur: BURY, Emmanuel, F-14130 Pont l'Evêque (FR); KERDRAON, Alan, F-14000 Caen (FR); REBILLON, Jacques-Olivier, F-14000 Caen (FR); FLAMANT, Eric, F-14000 Caen (FR)
(74) Mandataire: Desormiere, Pierre-Louis
(86) Numéro de dépôt international: PCT/FR2002/004337
(87) Numéro de publication internationale: WO 2003/055192

(56) Documents cités:
- US-A- 4 932 050
- US-A- 5 742 905
- US-A1- 2002 078 150

## Description

La présente invention concerne les services téléphoniques et en particulier un service de renvoi automatique d'un appel vers un terminal permettant d'entrer en communication avec le correspondant recherché.

Actuellement, certains réseaux cellulaires ou commutés offrent un service de renvoi automatique, permettant à un utilisateur de transférer tous les appels arrivant sur un terminal, vers un autre terminal spécifié par l'utilisateur.

Un tel service présente l'inconvénient de nécessiter une intervention de l'utilisateur qui doit avant chaque déplacement programmer un renvoi depuis son terminal, spécifiant le numéro du terminal vers lequel transférer les appels. Cette programmation de renvoi doit être effectuée à partir du terminal dont les appels doivent être renvoyés. En outre, le coût de la communication entre le terminal appelé et le terminal vers lequel l'appel est renvoyé est à la charge de l'utilisateur appelé. Les utilisateurs sont donc dissuadés d'utiliser un tel service, en particulier s'ils sont amenés à effectuer des déplacements, fréquemment ou sur de longues distances.
Pour être toujours joignable même durant des déplacements, on a mis en place des systèmes de téléphonie mobile. Toutefois, ces systèmes n'offrent pas une couverture complète d'un territoire et sont relativement onéreux par comparaison aux réseaux de téléphonie terrestres. Il est donc souhaitable, même lorsqu'un utilisateur dispose d'un téléphone mobile d'appeler l'utilisateur en priorité sur un téléphone fixe.

Le document US-A-5 742 905 décrit un système de renvoi automatique d'un appel vers un utilisateur enregistré, émis par un utilisateur appelant dans un système de télécommunication comprenant au moins un réseau de télécommunication, chaque utilisateur étant équipé de plusieurs terminaux de télécommunication susceptibles d'être connectés à l'un des réseaux. L'utilisateur enregistré reçoit lors d'un appel par l'utilisateur appelant un message sur son assistent personnel PDA. L'utilisateur enregistré peut alors indiquer où il veut recevoir l'appel. L'accessibilité de ce PDA détermine donc l'accessibilité de l'utilisateur et lorsque ce PDA est éteint ou hors de couverture réseau, les appels seront acheminés vers une destination par défaut.

En outre, si un correspondant recherché dispose de plusieurs terminaux de communication (téléphone fixe personnel et au bureau, téléphone mobile), l'appelant est amené à effectuer une tentative d'appel de chacun de ces terminaux l'un après l'autre, jusqu'à ce que le correspondant recherché réponde. Lorsque ces terminaux sont chacun couplés à un service de messagerie vocale ou sont accessibles par l'intermédiaire d'un standard téléphonique, une communication est établie à chaque tentative d'appel, même si le correspondant recherché n'est pas en mesure de répondre. Dès l'instant où le terminal appelé décroche, une communication est facturée à l'appelant. Il en résulte que de nombreux appels sont facturés par les opérateurs de télécommunication, alors qu'ils n'ont pas permis d'établir une communication avec le correspondant recherché.

La présente invention a pour but de supprimer cet inconvénient. Cet objectif est atteint par la prévision d'un procédé de renvoi automatique d'un appel vers un utilisateur enregistré, émis par un utilisateur appelant dans un système de télécommunication comprenant au moins un réseau de télécommunication ou de transmission de données numériques, chaque utilisateur étant équipé de plusieurs terminaux de télécommunication susceptibles d'être connectés à l'un des réseaux, le procédé comprenant les étapes consistant à :
- introduire un profil d'utilisateur pour chaque utilisateur enregistré, comprenant les numéros d'appel respectifs des terminaux par lesquels l'utilisateur peut être appelé,
- à déterminer et maintenir à jour un état d'accessibilité de chaque terminal d'utilisateur enregistré, selon que le terminal est accessible ou non par un réseau et est ou non en communication, et
- lorsqu'un utilisateur appelant compose un numéro de contact préalablement attribué à un utilisateur enregistré, à mettre en communication l'utilisateur appelant avec un serveur d'appel qui établit ou non une communication avec l'un des terminaux de l'utilisateur enregistré, en fonction de l'état d'accessibilité des terminaux de l'utilisateur enregistré,

Selon l'invention, l'état d'accessibilité de chaque terminal indique en outre si l'utilisateur est ou non accessible par le terminal, la mise en communication d'un utilisateur appelant avec un terminal de l'utilisateur appelé étant en outre effectuée en fonction d'un ordre de priorité attribué à chacun de ces terminaux si plusieurs terminaux de l'utilisateur sont accessibles.

De préférence, préalablement à l'établissement d'une communication entre l'utilisateur enregistré appelé et l'utilisateur appelant, le serveur d'appel demande à l'utilisateur appelé s'il accepte ou non d'être mis en communication avec l'utilisateur appelant, et établit la communication uniquement si l'utilisateur appelé l'accepte.

Selon une autre particularité de l'invention, lorsqu'un utilisateur enregistré passe d'un état dans lequel il se trouve à proximité d'un terminal identifié dans son profil, et/ou dans lequel le terminal peut recevoir des appels d'un réseau, vers un état dans lequel il ne se trouve plus à proximité d'un terminal identifié dans son profil, ou dans lequel le terminal n'est plus en mesure de recevoir des appels d'un réseau, et inversement, une procédure de déclaration d'accessibilité du terminal est déclenchée pour mettre à jour l'état d'accessibilité du terminal.

La présente invention concerne également un système pour le renvoi automatique d'un appel vers un utilisateur enregistré, émis par un utilisateur appelant dans un système de télécommunication comprenant au moins un réseau de télécommunication ou de transmission de données numériques, chaque utilisateur étant équipé de plusieurs terminaux de télécommunication susceptibles d'être connectés à l'un des réseaux, le système comprenant :
- un serveur de coordination de services auprès duquel les utilisateurs du service de renvoi automatique doivent s'enregistrer et introduire un profil d'utilisateur comprenant les numéros d'appel respectifs des terminaux par lesquels l'utilisateur peut être appelé,
- des moyens pour tenir à jour un état d'accessibilité de chaque terminal d'utilisateur enregistré, selon que le terminal est ou non accessible par un réseau et est ou non en communication, et
- un serveur d'appel vers lequel sont transmis tous les appels destinés aux utilisateurs enregistrés, et qui comprend des moyens pour établir une communication entre un utilisateur appelant et un utilisateur appelé, par l'intermédiaire d'un terminal de l'utilisateur appelé,

Selon l'invention, l'état d'accessibilité de chaque terminal indique en outre si l'utilisateur est ou non accessible par le terminal, le serveur d'appel comprenant des moyens pour sélectionner un terminal d'un utilisateur enregistré appelé avec lequel établir une communication, en fonction de l'état d'accessibilité des terminaux de l'utilisateur appelé, et d'un ordre de priorité attribué à chacun des terminaux de l'utilisateur appelé.

Avantageusement, chaque terminal d'utilisateur enregistré est associé à des moyens pour émettre un message d'accessibilité vers les moyens de mise à jour de l'état d'accessibilité des terminaux des utilisateurs enregistrés, à chaque fois que l'utilisateur se trouve en mesure de répondre à un appel reçu par le terminal.

De préférence, dans le cas où le terminal de l'utilisateur enregistré est un téléphone fixe, il comprend des moyens pour détecter la présence ou l'absence de l'utilisateur à proximité du téléphone fixe, et des moyens pour transmettre vers les moyens de mise à jour de l'état d'accessibilité des terminaux des utilisateurs enregistrés, un message d'accessibilité du téléphone fixe à chaque changement d'état de présence de l'utilisateur à proximité du téléphone fixe.

De préférence, dans le cas où le terminal de l'utilisateur est un téléphone mobile, il comprend un programme qui est chargé dans la mémoire du téléphone mobile et qui est exécuté à la mise sous tension du téléphone mobile si celui-ci se trouve dans une zone couverte par un réseau de téléphonie cellulaire correspondant, ou à la mise hors tension du téléphone mobile, pour déclencher l'émission vers les moyens de mise à jour de l'état d'accessibilité de l'utilisateur, d'un message d'accessibilité du téléphone mobile pour déclarer celui-ci respectivement accessible, ou non accessible.

De préférence, dans le cas où le terminal de l'utilisateur est un terminal muni de moyens de traitement de données et connecté à un réseau terrestre, il comprend un programme qui est chargé dans la mémoire du terminal et qui est exécuté à la mise sous tension du terminal, ou à la mise hors tension du terminal, pour déclencher l'émission vers les moyens de mise à jour de l'état d'accessibilité de l'utilisateur, d'un message d'accessibilité du terminal pour déclarer celui-ci respectivement accessible, ou non accessible.

Un mode de réalisation préféré de l'invention sera décrit ci-après, à titre d'exemple non limitatif, avec référence aux dessins annexés dans lesquels
La figure 1 représente sous la forme d'un schéma bloc un système de renvoi automatique selon l'invention ;
La figure 2 montre en détail sous la forme d'un schéma-bloc un serveur de coordination de services utilisé dans le système représenté sur la figure 1 ;
La figure 3 représente sous la forme d'organigramme les différentes étapes d'un procédé de renvoi automatique selon l'invention.

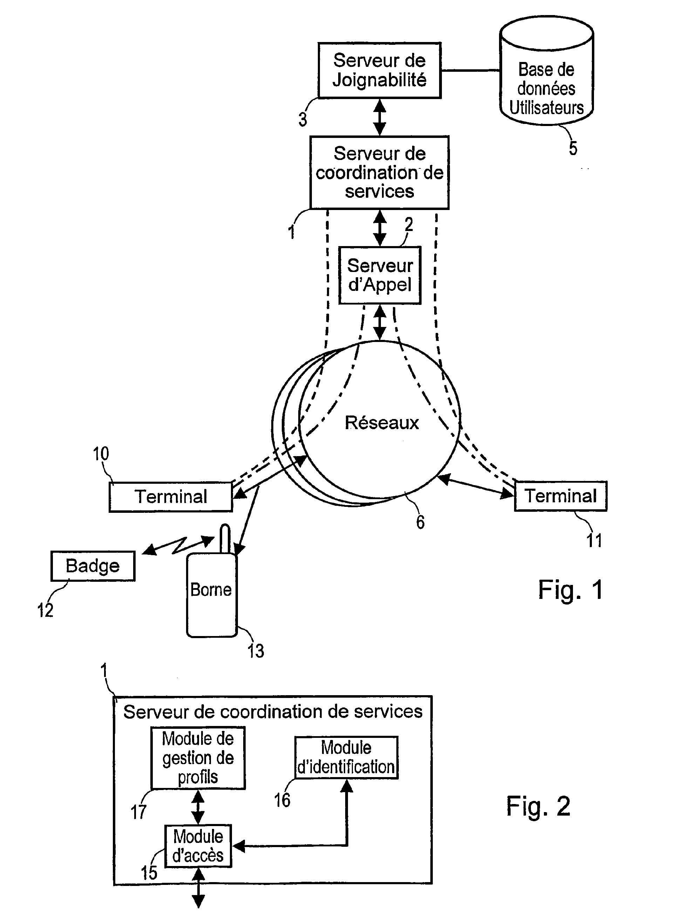

Le système représenté sur la figure 1 comprend un serveur d'appel 2 permettant la mise en communication de plusieurs correspondants équipés chacun d'au moins un terminal 10, 11, via un ou plusieurs réseaux de télécommunication 6, un serveur de joignabilité 3 qui dispose d'un accès à l'ensemble des informations déterminant la joignabilité d'un utilisateur enregistré, et un serveur de coordination de services 1 qui assure notamment la cohérence entre les traitements effectués par le serveur de joignabilité 3 et le serveur d'appel 2.

Les serveurs 1, 2, 3 sont interconnectés par un réseau de transmission de données qui peut être de type privé ou public, par exemple le réseau Internet.

Le serveur d'appel 2 est avantageusement conçu pour diffuser des messages vocaux à un ou plusieurs correspondants. Il peut être constitué d'un point de commande de service (PCS) ou d'un noeud de service dans un réseau dit intelligent, d'un serveur Proxy SIP ou d'un "Gatekeeper VoIP".

Le serveur de joignabilité 3 a accès à une base de données 5 de profils d'utilisateur contenant pour chaque utilisateur enregistré du service de renvoi automatique les numéros d'appel des terminaux de l'utilisateur.

Le profil d'un utilisateur dans la base de données 5 peut également comprendre un ou plusieurs répertoires de correspondants de l'utilisateur, chaque répertoire comportant une entrée par correspondant associant un identifiant et un numéro d'appel.

Les répertoires et agendas de chaque utilisateur peuvent également être mis en oeuvre sous la forme de services distincts gérés par des entités distinctes. Dans ce cas, la base de données 5 peut être répartie sur plusieurs serveurs externes distincts.

Pour pouvoir bénéficier du service de renvoi automatique, chaque utilisateur doit s'enregistrer et éventuellement s'abonner auprès du serveur de coordination de services 1 et définir un profil dans lequel il fournit toutes les informations nécessaires au service de renvoi automatique, ces informations comprenant notamment les numéros d'appel ou adresses de tous les terminaux 10, 11 par lesquels l'utilisateur peut être joignable, chaque terminal ainsi spécifié peut éventuellement être associé à un ordre de préférence. Bien entendu, par un moyen approprié (par exemple un ordinateur connecté au réseau Internet), les utilisateurs enregistrés peuvent avoir accès en mise à jour aux informations de profil les concernant, contenues dans la base de données 5, par exemple par l'intermédiaire d'un site accessible par le réseau Internet et dont l'accès nécessite la saisie d'un identifiant et d'un mot de passe.

A l'enregistrement d'un utilisateur, le serveur de coordination de services 1 attribue à l'utilisateur un numéro d'identification ou de contact lui permettant d'être identifié par le serveur et à l'aide duquel il peut aussi être appelé par ses correspondants. Ce numéro de contact peut être un numéro défini selon la norme E164, le numéro d'appel du téléphone fixe ou mobile de l'utilisateur, une adresse IP (Internet Protocol), ou encore une adresse de messagerie électronique, ou tout autre type d'adresse pouvant caractériser le point de connexion d'un terminal à un réseau.

Le terminal 10, 11 susceptible d'être utilisé pour être appelé par le service de renvoi automatique peut être un téléphone mobile ou tout autre terminal disposant d'un accès à un réseau de radiotéléphonie cellulaire, un terminal IP relié à un réseau public de transmission de données (par exemple un ordinateur connecté au réseau Internet), et également un téléphone fixe relié à un réseau de téléphonique commuté public. Un terminal IP peut être utilisé avec une application de messagerie électronique instantanée ou de téléphonie IP.

Au démarrage, le terminal mobile ou IP exécute une procédure de déclaration d'accessibilité, préalablement installée dans le terminal, soit dans la mémoire du terminal, soit dans la carte SIM, soit dans un module mémoire enfichable dans le terminal. Cette procédure consiste à émettre un message à destination du serveur de coordination de services 1 contenant le numéro d'appel ou l'adresse IP du terminal. Cette procédure peut également consister à appeler le serveur 1 qui mémorise à la connexion le numéro d'appel du terminal.
Dans le cas d'un terminal mobile, la transmission d'un tel message peut être effectuée sous la forme d'un message de données, par exemple de type SMS (Short Message Service) ou USSD (Unstructured Supplemental Service Data) dans le cas d'un réseau GSM, d'un message MMS (Multimedia Messaging Service) dans le cas d'un réseau de type UMTS, ou d'un message transmis par un canal de données selon la norme GPRS (General Packet Radio Service), ou encore d'un message WAP (Wireless Application Protocol).

A l'inverse, lorsque l'utilisateur met hors tension ou déconnecte son terminal, celui-ci exécute au préalable une procédure de déclaration d'accessibilité analogue, au cours de laquelle le terminal est déclaré non accessible au serveur 1. Une telle procédure de déconnexion peut également être déclenchée automatiquement dans le cas d'un terminal mobile, lorsque le niveau de tension des batteries du terminal atteint un seuil bas prédéfini. On peut également prévoir d'exécuter la procédure de déclaration d'accessibilité à chaque passage d'une zone non couverte vers une zone couverte par le réseau cellulaire correspondant au terminal mobile.

Dans le cas ou le terminal 10, 11 est un téléphone fixe, l'utilisateur du service doit se déclarer accessible, c'est-à-dire déclarer qu'il se trouve en mesure de répondre si le téléphone fixé sonne. Une telle déclaration peut être effectuée manuellement en appelant le serveur de coordination de services 1, en composant un numéro d'appel du serveur 1 prévu à cet effet, ou à l'aide d'une touche du combiné, préprogrammée à cet effet. Cette déclaration peut également être effectuée automatiquement par l'intermédiaire d'une borne 13 reliée au réseau par la même ligne que le téléphone fixe, et disposant de moyens de transmission par radio de courte portée (quelques mètres à quelques dizaines de mètres) par exemple conformes à la norme "Bluetooth". Une telle borne peut également être intégrée dans le téléphone fixe. De son côté, l'utilisateur doit porter des moyens de transmission correspondants, conçus de manière à recevoir un message émis périodiquement par la borne et à transmettre à la borne en réponse un message d'accusé de réception, tant que ces moyens de transmission se trouvent à portée radio de la borne.

Avantageusement, le message d'accusé de réception émis par les moyens de transmission portables contient le numéro de contact ou d'appel de l'utilisateur. De cette manière, un utilisateur peut être considéré connecté par le serveur 1 sur un téléphone fixe appartenant à un autre utilisateur.
Les moyens de transmission radio portables de courte portée se présentent par exemple sous la forme d'un badge ou d'une carte à puce sans contact. Ils peuvent également être intégrés dans le terminal mobile de l'utilisateur.

A la première réception d'un tel message d'accusé de réception, la borne 13 appelle le serveur 1 pour déclarer la présence de l'utilisateur à proximité de son téléphone fixe. Inversement, lorsque la borne ne reçoit plus de messages d'accusé de réception du badge 12, la borne 13 appelle à nouveau le serveur 1 pour déclarer le départ de l'utilisateur.

Lorsqu'un terminal d'utilisateur est ainsi détecté accessible, c'est-à-dire qu'il permet d'entrer en communication avec l'utilisateur, le serveur de coordination de services 1 crée une session d'accès correspondant au terminal de l'utilisateur, et une session de service.
Si plusieurs terminaux d'un même utilisateur sont déclarés accessibles, on peut appliquer un ordre de priorité, par exemple défini dans le profil de l'utilisateur, ou par défaut si le profil ne spécifie pas d'ordre de priorité.

Sur la figure 2, le serveur de coordination de services 1 comprend un module d'accès 15, un module 16 d'identification et d'authentification, un module 17 de gestion de profils d'abonnés. Le module 15 constitue un point d'accès au serveur de coordination de services 1 et reçoit des demandes de service provenant des utilisateurs, par l'intermédiaire du serveur d'appel 2. A la connexion d'un utilisateur, une demande de service émise au serveur de coordination de services contient des informations concernant l'identité de l'utilisateur comprenant au moins un identifiant, et éventuellement un mot de passe, et des informations concernant le service demandé. Dans le cas présent, ces informations contiennent par exemple le numéro d'appel de l'utilisateur. Le module 16 d'identification et d'authentification est relié au module d'accès et a pour fonction d'identifier et d'authentifier un utilisateur à partir d'une information d'identification et éventuellement un mot de passe ou un numéro de carte SIM (dans le cas de téléphones mobiles). Ce module vérifie l'existence de l'utilisateur et l'authentifie par exemple à l'aide du mot de passe ou du numéro de carte SIM. Le module 16 communique au module d'accès 15 le résultat de l'identification et de l'authentification.
Le module de gestion de profils 17 gère des profils d'utilisateurs stockés dans une ou plusieurs bases de données de profils et notamment la base de données 5. A partir de l'identifiant d'un utilisateur fourni par le module d'accès 15, le gestionnaire de profils 17 interroge la base de données pour obtenir le profil de l'utilisateur correspondant à l'identifiant fourni. Le gestionnaire de profils crée, pour chaque utilisateur, un contexte unique auquel est rattaché :
- une ou plusieurs sessions d'accès, caractérisant la connexion physique de l'utilisateur (PC, téléphone mobile ou fixe, ...) ou l'activation du service de rappel automatique par l'utilisateur, et
- une ou plusieurs sessions de service, rattachée à une session d'accès et caractérisant le déroulement du traitement d'un service.

Lorsqu'un utilisateur équipé d'un terminal 11 cherche à joindre un utilisateur enregistré équipé d'un terminal 10, il doit appeler le serveur d'appel 2 et fournir le numéro de contact de l'utilisateur à appeler. L'accès au serveur d'appel 2 peut par exemple être effectué en composant un numéro de préfixe suivi du numéro de contact du correspondant à appeler ou être effectué automatiquement au niveau du commutateur qui à la suite de la détection du numéro de contact du terminal redirige systématiquement l'appel vers le serveur d'appel.

Dans un mode de réalisation avantageux de l'invention, un utilisateur enregistré peut être appelé par n'importe quel numéro d'appel ou adresse d'un des terminaux de l'utilisateur, mémorisé dans le profil de ce dernier, tous les appels vers ces numéros et adresses étant redirigés automatiquement vers le serveur d'appel 2.

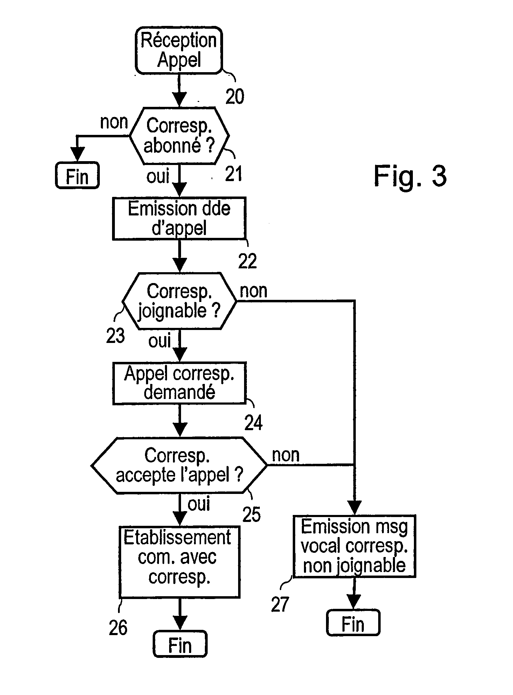

Le serveur d'appel 2 qui reçoit un appel exécute la procédure 20 représentée sur la figure 3. A l'étape 21, le serveur d'appel détermine si le numéro à appeler reçu correspond à un utilisateur enregistré auprès du serveur de coordination de services 1. A cet effet, il émet une requête au serveur 1 qui lui fournit la réponse. Si le correspondant demandé est un utilisateur enregistré, le serveur d'appel 2 transmet 22 un message de requête de service d'accès au serveur de coordination de services 1, contenant le numéro de contact à appeler et éventuellement le numéro d'appel de l'utilisateur appelant.

Il est à noter que l'utilisateur appelant n'est pas nécessairement enregistré ou abonné auprès du serveur de coordination de services 1.

Le serveur 1 qui reçoit une telle requête détermine s'il existe une session d'accès et de service correspondant à l'utilisateur recherché (utilisateur accessible) et si le terminal accessible de l'utilisateur recherché est libre ou en communication, en fonction des sessions d'accès et de service actives pour l'utilisateur recherché.
Le serveur de coordination de services 1 détermine à partir de l'état d'accessibilité de l'utilisateur demandé (au moins un terminal de l'utilisateur demandé accessible ou non), si l'utilisateur demandé est joignable (si au moins un terminal de l'utilisateur est accessible et non occupé), et transmet ces informations au serveur d'appel 2.

Le serveur d'appel reçoit 22 et analyse ces informations. Si le correspondant demandé est joignable (étape 23), le serveur d'appel appelle 24 le correspondant demandé sur le terminal accessible, et le met en communication 26 avec l'utilisateur appelant.

Avantageusement, préalablement à l'établissement de la communication entre le correspondant demandé et l'utilisateur appelant, le serveur d'appel demande 25 au correspondant demandé s'il accepte de recevoir un appel de l'utilisateur appelant (identifié par son numéro d'appel ou par son nom s'il est mentionné en association avec son numéro d'appel dans le répertoire du profil de l'utilisateur mémorisé dans la base de données 5).
Si le correspondant demandé accepte l'appel, par exemple en appuyant sur une touche particulière de son terminal 10,11 (étape 25), le serveur d'appel 2 met l'utilisateur demandé en communication avec l'utilisateur appelant (étape 26).

Si le correspondant refuse l'appel à l'étape 25, ou n'est pas joignable à l'étape 23, le serveur d'appel diffuse 27 à l'utilisateur appelant un message, par exemple vocal, indiquant que le correspondant recherché n'est pas joignable ou est occupé. Dans ce cas, le serveur d'appel 2 peut proposer à l'utilisateur appelant de lui donner accès à une messagerie vocale du correspondant demandé. Si l'utilisateur appelant demande de déposer un message dans la boîte vocale de son correspondant, il est mis en relation par le serveur d'appel avec la boîte vocale du correspondant demandé pour y laisser un message.

Il est à noter qu'à l'étape 24, il peut se produire que l'utilisateur recherché soit enregistré à l'état accessible, mais ne puisse pas être appelé. Un tel cas est détecté à l'expiration d'une temporisation déclenchée à l'émission d'un message de demande d'établissement de communication, à l'étape 24. Ce cas se produit par exemple lorsque le terminal concerné est un terminal mobile qui est sorti de la zone couverte par le réseau mobile correspondant. Le serveur 1 met alors à jour l'état d'accessibilité du terminal de l'utilisateur recherché à l'état "non accessible" et si aucun autre terminal de l'utilisateur n'est à l'état accessible, le serveur d'appel 2 exécute l'étape 27 décrite ci-avant.

## Revendications

1. Procédé de renvoi automatique d'un appel vers un utilisateur enregistré, émis par un utilisateur appelant dans un système de télécommunication comprenant au moins un réseau (6) de télécommunication ou de transmission de données numériques, chaque utilisateur étant équipé de plusieurs terminaux (10, 11) de télécommunication susceptibles d'être connectés à l'un des réseaux, le procédé comprenant les étapes consistant à :
- introduire un profil d'utilisateur pour chaque utilisateur enregistré, comprenant les numéros d'appel respectifs des terminaux (10, 11) par lesquels l'utilisateur peut être appelé,
- à déterminer et maintenir à jour un état d'accessibilité de chaque terminal d'utilisateur enregistré, selon que le terminal est accessible ou non par un réseau et est ou non en communication, et
- lorsqu'un utilisateur appelant compose un numéro de contact préalablement attribué à un utilisateur enregistré, à mettre en communication l'utilisateur appelant avec un serveur d'appel (2) qui établit (26) ou non une communication avec l'un des terminaux de l'utilisateur enregistré, en fonction de l'état d'accessibilité des terminaux de l'utilisateur enregistré,
**caractérisé en ce que** l'état d'accessibilité de chaque terminal indique en outre si l'utilisateur est ou non accessible par le terminal, la mise en communication d'un utilisateur appelant avec un terminal de l'utilisateur appelé étant en outre effectuée en fonction d'un ordre de priorité attribué à chacun de ces terminaux si plusieurs terminaux (10, 11) de l'utilisateur sont accessibles.

2. Procédé selon la revendication 1,
**caractérisé en ce que**, préalablement à l'établissement d'une communication entre l'utilisateur enregistré appelé et l'utilisateur appelant, le serveur d'appel (2) demande (24, 25) à l'utilisateur appelé s'il accepte ou non d'être mis en communication avec l'utilisateur appelant, et établit la communication uniquement si l'utilisateur appelé l'accepte.

3. Procédé selon la revendication 1 ou 2,
**caractérisé en ce que** lorsqu'un utilisateur enregistré passe d'un état dans lequel il se trouve joignable par l'intermédiaire d'un terminal identifié dans son profil, vers un état dans lequel il ne se trouve plus joignable par l'intermédiaire du terminal, et inversement, une procédure de déclaration d'accessibilité du terminal est déclenchée pour mettre à jour l'état d'accessibilité du terminal.

4. Système de renvoi automatique d'un appel vers un utilisateur enregistré, émis par un utilisateur appelant dans un système de télécommunication comprenant au moins un réseau (6) de télécommunication ou de transmission de données numériques, chaque utilisateur étant équipé de plusieurs terminaux (10, 11) de télécommunication susceptibles d'être connectés à l'un des réseaux, le système comprenant :
- un serveur (1) de coordination de services auprès duquel les utilisateurs du service de renvoi automatique doivent s'enregistrer et introduire un profil d'utilisateur comprenant les numéros d'appel respectifs des terminaux (10, 11) par lesquels l'utilisateur peut être appelé,
- des moyens (1) pour tenir à jour un état d'accessibilité de chaque terminal d'utilisateur enregistré, selon que le terminal est ou non accessible par un réseau et est ou non en communication, et
- un serveur d'appel (2) vers lequel sont transmis tous les appels destinés aux utilisateurs enregistrés, et qui comprend des moyens pour établir une communication entre un utilisateur appelant et un utilisateur appelé, par l'intermédiaire d'un terminal de l'utilisateur appelé,
**caractérisé en ce que** l'état d'accessibilité de chaque terminal indique en outre si l'utilisateur est ou non accessible par le terminal, le serveur d'appel (2) comprenant des moyens pour sélectionner un terminal d'un utilisateur enregistré appelé avec lequel établir une communication, en fonction de l'état d'accessibilité des terminaux de l'utilisateur appelé, et d'un ordre de priorité attribué à chacun des terminaux de l'utilisateur appelé.

5. Système selon la revendication 4,
**caractérisé en ce que** chaque terminal (10, 11) d'utilisateur enregistré est associé à des moyens pour émettre un message d'accessibilité vers les moyens de mise à jour de l'état d'accessibilité des terminaux des utilisateurs enregistrés, à chaque fois que l'utilisateur se trouve en mesure de répondre à un appel reçu par le terminal.

6. Système selon la revendication 4 ou 5,
**caractérisé en ce que** dans le cas où le terminal (10, 11) de l'utilisateur enregistré est un téléphone fixe (10), il comprend des moyens (12, 13) pour détecter la présence ou l'absence de l'utilisateur à proximité du téléphone fixe, et des moyens (13) pour transmettre vers les moyens de mise à jour de l'état d'accessibilité des terminaux des utilisateurs enregistrés, un message d'accessibilité du téléphone fixe à chaque changement d'état de présence de l'utilisateur à proximité du téléphone fixe.

7. Système selon l'une des revendications 4 à 6,
**caractérisé en ce que** dans le cas où le terminal (10, 11) de l'utilisateur est un téléphone mobile (11), il comprend un programme qui est chargé dans une mémoire accessible par le téléphone mobile et qui est exécuté à la mise sous tension du téléphone mobile si celui-ci se trouve dans une zone couverte par un réseau (6) de téléphonie cellulaire correspondant, ou à la mise hors tension du téléphone mobile, pour déclencher l'émission vers les moyens de mise à jour de l'état d'accessibilité de l'utilisateur, d'un message d'accessibilité du téléphone mobile pour déclarer celui-ci respectivement accessible, ou non accessible.

8. Système selon l'une des revendications 4 à 7,
**caractérisé en ce que** dans le cas où le terminal (10, 11) de l'utilisateur est un terminal (10) muni de moyens de traitement de données et connecté à un réseau terrestre (6), il comprend un programme qui est chargé dans la mémoire du terminal et qui est exécuté à la mise sous tension du terminal, ou à la mise hors tension du terminal, pour déclencher l'émission vers les moyens de mise à jour de l'état d'accessibilité de l'utilisateur, d'un message d'accessibilité du terminal pour déclarer celui-ci respectivement accessible, ou non accessible.

## Claims

1. Method for automatically forwarding a call to a registered user, sent by a calling user in a telecommunication system comprising at least one telecommunication or digital data transmission network (6), each user being equipped with several telecommunication terminals (10, 11) that may be connected to one of the networks, the method comprising the steps consisting in:
- introducing a user profile for each registered user, comprising the respective call numbers of the terminals (10, 11) by which the user can be called,
- in determining and keeping up-to-date a state of accessibility of each registered-user terminal, depending on whether the terminal is or is not accessible by a network and is or is not in communication, and
- when a calling user dials a contact number previously allocated to a registered user, in placing the calling user in communication with a call server (2) which establishes (26) or does not establish a communication with one of the terminals of the registered user, as a function of the state of accessibility of the terminals of the registered user,
**characterized in that** the state of accessibility of each terminal furthermore indicates whether the user is or is not accessible by the terminal, a calling user being furthermore placed in communication with a terminal of the called user as a function of an order of priority allocated to each of these terminals if several terminals (10, 11) of the user are accessible.

2. Method according to Claim 1,
**characterized in that**, prior to the establishment of a communication between the called registered user and the calling user, the call server (2) asks (24, 25) the called user whether or not he agrees to be placed in communication with the calling user, and establishes the communication only if the called user so agrees.

3. Method according to Claim 1 or 2,
**characterized in that** when a registered user passes from a state in which he can be reached by way of a terminal identified in his profile, to a state in which he can no longer be reached by way of the terminal, and vice versa, a procedure for declaring accessibility of the terminal is triggered so as to update the state of accessibility of the terminal.

4. System for automatically forwarding a call to a registered user, sent by a calling user in a telecommunication system comprising at least one telecommunication or digital data transmission network (6), each user being equipped with several telecommunication terminals (10, 11) that may be connected to one of the networks, the system comprising:
- a services coordination server (1) with which the users of the automatic forwarding service must register and introduce a user profile comprising the respective call numbers of the terminals (10, 11) by which the user can be called,
- means (1) for keeping up-to-date a state of accessibility of each registered-user terminal, depending on whether the terminal is or is not accessible by a network and is or is not in communication, and
- a call server (2) to which all the calls intended for the registered users are transmitted, and which comprises means for establishing a communication between a calling user and a called user, by way of a terminal of the called user,
**characterized in that** the state of accessibility of each terminal furthermore indicates whether the user is or is not accessible by the terminal, the call server (2) comprising means for selecting a terminal of a called registered user with which to establish a communication, as a function of the state of accessibility of the terminals of the called user, and of an order of priority allocated to each of the terminals of the called user.

5. System according to Claim 4,
**characterized in that** each registered-user terminal (10, 11) is associated with means for sending an accessibility message to the means for updating the state of accessibility of the terminals of the registered users, each time that the user is able to respond to a call received by the terminal.

6. System according to Claim 4 or 5,
**characterized in that** in the case where the terminal (10, 11) of the registered user is a fixed telephone (10), it comprises means (12, 13) for detecting the presence or the absence of the user in proximity to the fixed telephone, and means (13) for transmitting to the means for updating the state of accessibility of the terminals of the registered users, a message of accessibility of the fixed telephone upon each change of state of presence of the user in proximity to the fixed telephone.

7. System according to one of Claims 4 to 6,
**characterized in that** in the case where the terminal (10, 11) of the user is a mobile telephone (11), it comprises a program which is loaded into a memory accessible by the mobile telephone and which is executed upon switching on the mobile telephone if the latter is situated in a zone covered by a corresponding cellular telephony network (6), or upon switching off the mobile telephone, so as to trigger the sending to the means for updating the state of accessibility of the user, of a message of accessibility of the mobile telephone so as to declare the latter respectively accessible, or inaccessible.

8. System according to one of Claims 4 to 7,
**characterized in that** in the case where the terminal (10, 11) of the user is a terminal (10) furnished with data processing means and connected to a terrestrial network (6), it comprises a program which is loaded into the memory of the terminal and which is executed upon switching on the terminal, or upon switching off the terminal, so as to trigger the sending to the means for updating the state of accessibility of the user, of a message of accessibility of the terminal so as to declare the latter respectively accessible, or inaccessible.

## Patentansprüche

1. Verfahren zur automatischen Weiterleitung eines Anrufs an einen registrierten Benutzer, der von einem anrufenden Benutzer in einem Telekommunikationssystem gesendet wird, das mindestens ein Telekommunikationsnetz oder ein Übertragungsnetz digitaler Daten (6) enthält, wobei jeder Benutzer mit mehreren Telekommunikationsendgeräten (10, 11) ausgestattet ist, die mit einem der Netze verbunden werden können, wobei das Verfahren die Schritte enthält, die darin bestehen:
- ein Benutzerprofil für jeden registrierten Benutzer einzugeben, das die Rufnummern der Endgeräte (10, 11) enthält, über die der Benutzer angerufen werden kann,
- einen Zustand der Zugänglichkeit jedes Endgeräts eines registrierten Benutzers zu bestimmen und auf dem neuesten Stand zu halten, je nachdem, ob das Endgerät über ein Netz zugänglich ist oder nicht und verbunden ist oder nicht, und
- wenn ein anrufender Benutzer eine vorab einem registrierten Benutzer zugeteilte Kontaktnummer wählt, den anrufenden Benutzer mit einem Anrufserver (2) zu verbinden, der abhängig vom Zugänglichkeitszustand der Endgeräte des registrierten Benutzers eine Verbindung mit einem der Endgeräte des registrierten Benutzers aufbaut oder nicht (26),
**dadurch gekennzeichnet, dass** der Zugänglichkeitszustand jedes Endgeräts außerdem angibt, ob der Benutzer über das Endgerät zugänglich ist oder nicht, wobei die Verbindung eines anrufenden Benutzers mit einem Endgerät des angerufenen Benutzers außerdem in Abhängigkeit von einer jedem dieser Endgeräte zugeteilten Prioritätsreihenfolge durchgeführt wird, wenn mehrere Endgeräte (10, 11) des Benutzers zugänglich sind.

2. Verfahren nach Anspruch 1, **dadurch gekennzeichnet, dass** vor dem Aufbau einer Verbindung zwischen dem angerufenen registrierten Benutzer und dem anrufenden Benutzer der Anrufserver (2) den angerufenen Benutzer fragt (24, 25), ob er akzeptiert oder nicht, mit dem anrufenden Benutzer verbunden zu werden, und die Verbindung nur aufbaut, wenn der angerufene Benutzer sie akzeptiert.

3. Verfahren nach Anspruch 1 oder 2, **dadurch gekennzeichnet, dass**, wenn ein registrierter Benutzer von einem Zustand, in dem er über ein in seinem Profil identifiziertes Endgerät zugänglich ist, in einen Zustand übergeht, in dem er nicht mehr über das Endgerät zugänglich ist, und umgekehrt, eine Prozedur der Zugänglichkeitserklärung des Endgeräts ausgelöst wird, um den Zugänglichkeitszustand des Endgeräts zu aktualisieren.

4. System zur automatischen Weiterleitung eines Anrufs an einen registrierten Benutzer, der von einem anrufenden Benutzer in einem Telekommunikationssystem gesendet wird, das mindestens ein Telekommunikationsnetz oder ein Übertragungsnetz digitaler Daten (6) enthält, wobei jeder Benutzer mit mehreren Telekommunikationsendgeräten (10, 11) ausgestattet ist, die mit einem der Netze verbunden werden können, wobei das System enthält:
- einen Server (1) zur Koordination von Diensten, bei dem die Benutzer des automatischen Weiterleitungsdiensts sich registrieren und ein Benutzerprofil eingeben müssen, das die jeweiligen Rufnummern der Endgeräte (10, 11) enthält, über die der Benutzer angerufen werden kann,
- Einrichtungen (1), um einen Zugänglichkeitszustand jedes Endgeräts eines registrierten Benutzers auf dem neuesten Stand zu halten, je nachdem, ob das Endgerät über ein Netz zugänglich ist oder nicht und ob es verbunden ist oder nicht, und
- einen Anrufserver (2), zu dem alle Anrufe übertragen werden, die für die registrierten Benutzer bestimmt sind, und der Einrichtungen enthält, um eine Verbindung zwischen einem anrufenden Benutzer und einem angerufenen Benutzer über ein Endgerät des angerufenen Benutzers aufzubauen,
**dadurch gekennzeichnet, dass** der Zugänglichkeitszustand jedes Endgeräts außerdem angibt, ob der Benutzer über das Endgerät zugänglich ist oder nicht, wobei der Anrufserver (2) Einrichtungen enthält, um ein Endgerät eines angerufenen registrierten Benutzers auszuwählen, mit dem eine Verbindung in Abhängigkeit vom Zugänglichkeitszustand der Endgeräte des angerufenen Benutzers und von einer Prioritätsreihenfolge aufzubauen ist, die jedem der Endgeräte des angerufenen Benutzers zugeteilt wird.

5. System nach Anspruch 4, **dadurch gekennzeichnet, dass** jedes Endgerät (10, 11) eines registrierten Benutzers Einrichtungen zugeordnet ist, um jedes Mal dann, wenn der Benutzer in der Lage ist, auf einen von dem Endgerät empfangenen Anruf zu antworten, eine Zugänglichkeitsmitteilung an die Einrichtungen zur Aktualisierung des Zugänglichkeitszustands der Endgeräte der registrierten Benutzer zu senden.

6. System nach Anspruch 4 oder 5, **dadurch gekennzeichnet, dass** es in dem Fall, in dem das Endgerät (10, 11) des registrierten Benutzers ein Festnetztelefon (10) ist, Einrichtungen (12, 13), um die Anwesenheit oder Abwesenheit des Benutzers in der Nähe des Festnetztelefons zu erfassen, und Einrichtungen (13) enthält, um bei jeder Anwesenheitszustandsänderung des Benutzers in der Nähe des Festnetztelefons eine Zugänglichkeitsmitteilung des Festnetztelefons an die Einrichtungen zur Aktualisierung des Zugänglichkeitszustands der Endgeräte der registrierten Benutzer zu übertragen.

7. System nach einem der Ansprüche 4 bis 6, **dadurch gekennzeichnet, dass** es in dem Fall, in dem das Endgerät (10, 11) des Benutzers ein Mobiltelefon (11) ist, ein Programm enthält, das in einen für das Mobiltelefon zugänglichen Speicher geladen wird, und das beim Einschalten des Mobiltelefons, wenn dieses sich in einer von einem entsprechenden zellularen Telefonnetz (6) abgedeckten Zone befindet, oder beim Ausschalten des Mobiltelefons ausgeführt wird, um das Senden an die Einrichtungen zur Aktualisierung des Zugänglichkeitszustands des Benutzers einer Zugänglichkeitsmitteilung des Mobiltelefons auszulösen, um dieses als zugänglich bzw. nicht zugänglich zu erklären.

8. System nach einem der Ansprüche 4 bis 7, **dadurch gekennzeichnet, dass** es in dem Fall, in dem das Endgerät (10, 11) des Benutzers ein Endgerät (10) ist, das mit Datenverarbeitungseinrichtungen ausgestattet und mit einem terrestrischen Netz (6) verbunden ist, ein Programm enthält, das in den Speicher des Endgeräts geladen wird, und das beim Einschalten des Endgeräts oder beim Ausschalten des Endgeräts ausgeführt wird, um das Senden an die Einrichtungen zur Aktualisierung des Zugänglichkeitszustands des Benutzers einer Zugänglichkeitsmitteilung des Endgeräts auszulösen, um dieses als zugänglich bzw. nicht zugänglich zu erklären.
